(19) Europäisches Patentamt
European Patent Office
Office européen des brevets

(11) Veröffentlichungsnummer: **0 001 086**
**A1**

(12) # EUROPÄISCHE PATENTANMELDUNG

(21) Anmeldenummer: **78100775.2**

(22) Anmeldetag: **29.08.78**

(51) Int. Cl.[2]: **D 06 P 1/52**
D 06 P 3/54, D 06 P 1/16
C 08 G 18/08, C 08 G 71/02
C 08 G 69/48, C 08 G 69/02
C 08 G 12/16, C 08 G 12/24

(30) Priorität: **10.09.77 DE 2740847**

(43) Veröffentlichungstag der Anmeldung:
**21.03.79 Patentblatt 79/6**

(84) Benannte Vertragsstaaten:
**CH DE FR GB**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Hildebrand, Dietrich, Dr.**
**Wingensiefer Kamp 13**
**D-5068 Odenthal(DE)**

(72) Erfinder: **Lehmann, Wolfgang, Dr.**
**Carl-Rumpff-Strasse 7**
**D-5090 Leverkusen(DE)**

(54) **Mittel zur Verhinderung der Migration von Dispersionsfarbstoffen sowie deren Verwendung beim kontinuierlichen Färben von Polyesterfasern.**

(57) Wasserlösliche Kondensate, die ein Molekulargewicht von mindestens 200, vorzugsweise mindestens 1000 und sich wiederholende Gruppierungen der Formel

$$-\overset{\overset{X}{\|}}{C}-NH- ,$$

worin X für 0 oder NH steht, aufweisen, zur Verhinderung der Migration von Dispersionsfarbstoffen bei kontinuierlichem Färben von Polyesterfasern.

EP 0 001 036 A1

BAYER AKTIENGESELLSCHAFT
Zentralbereich
Patente, Marken und Lizenzen

5090 Leverkusen, Bayerwerk
Mi-kl

**Mittel zur Verhinderung der Migration von Dispersionsfarbstoffen**

BEZEICHNUNG GEÄNDERT
siehe Titelseite

Gegenstand der Erfindung sind Mittel zur Verhinderung der Migration von Dispersionsfarbstoffen und kontinuierliche Verfahren zum Färben von Textilmaterialien, die ganz oder teilweise aus Polyestern bestehen, mit Dispersionsfarbstoffen in Gegenwart dieser Mittel.

Die erfindungsgemäßen migrationshemmenden Mittel sind wasserlösliche Kondensate, die ein Molekulargewicht von mindestens 200, vorzugsweise mindestens 1000 und sich wiederholende Gruppierungen der Formel

$$\overset{X}{\overset{\|}{-C}}-NH-$$

worin X für O oder NH steht, aufweisen.

Kondensate dieser Art sind bekannt. Es handelt sich insbesondere um sekundäre und/oder tertiäre und/oder quaternäre Aminogruppen enthaltende Polyamide, Polyurethane oder Polyharnstoffe mit einem Molekulargewicht von über 1000, vorzugsweise über 2500, oder um Polyguanidine mit einem Molekulargewicht von über 200, vorzugsweise über 1000.

Diejenigen der erfindungsgemäßen Mittel, die sich von sekundäre und/oder tertiäre Aminogruppen enthaltende Polyamiden ableiten, können sowohl in Form ihrer freien Basen als auch in Form ihrer Salze verwendet werden.

Die quartären Ammoniumverbindungen und Guanidine werden in Form ihrer Salze verwendet.

Als Gegenionen für die quaternären Ammoniumverbindungen und Guanidine kommen vorzugsweise folgende Anionen in Betracht:
Chlorid, Bromid, Iodid, Carbonat und Sulfat, Anionen saurer Ester anorganischer Säuren, wie Methylsulfat und Äthylsulfat und Anionen organischer Säuren wie Acetat, Propionat und Trichloracetat.

Als Beispiele für die erfindungsgemäßen Mittel seien die folgenden Produkte genannt:

A) Sekundäre und tertiäre Aminogruppen aufweisende Polyamide mit einem Molekulargewicht von mindestens 1000 sind beispielsweise bekannt aus den
deutschen Patentschriften 1 006 155,
1 264 943 und
1 771 814, aus der
deutschen Offenlegungsschrift 2 156 215, aus den
britischen Patentschriften 610 311,
616 443 und
1 035 296, aus der
US-Patentschrift 2 926 154 und aus der
französischen Patentschrift 2 010 727.

Diese Reaktionsprodukte werden in der Literatur als "Polyamidamine" bzw. "Polyamidoamine" bzw. "Polyamidpolyamine" bzw. "Polyaminopolyamide" bezeichnet.

Besonders bevorzugte Polyamide sind Reaktionsprodukte und deren Quaternierungsprodukte aus

a) cycloaliphatischen, araliphatischen oder heterocyclischen, vorzugsweise aliphatischen Polyaminen, die mindestens zwei zur Amidbildung befähigte Aminogruppen und mindestens eine weitere primäre, sekundäre oder tertiäre Aminogruppe enthalten; diese Polyamine können gegebenenfalls in Mischung mit aliphatischen, cycloaliphatischen, araliphatischen oder heterocyclischen, primäre oder sekundäre Aminogruppen enthaltenden Diaminen vorliegen, wobei die Menge dieser Diamine vorteilhaft so bemessen ist, daß je Mol der in den Polyaminen über die mindestens zwei zur Amidbildung befähigten Aminogruppen hinaus enthaltenden weiteren primären, sekundären der tertiären Aminogruppen bis zu 20 Mol% Diamine kommen;

b) aliphatischen oder aromatischen Dicarbonsäuren, insbesondere gesättigten, 4 bis 10 Kohlenstoffatomen enthaltenden aliphatischen Dicarbonsäuren bzw. deren funktionellen Derivaten, wie Anhydriden, Estern, Halbestern oder Amiden, und gegebenenfalls

c) mindestens 3 Kohlenstoffatome enthaltenden Aminocarbonsäuren oder deren Lactamen, insbesondere ε-Caprolactam,

sowie Produkte, denen durch Umsetzung mit 1,2-Alkyleniminen 1,2-Polyalkylenpolyamin-Seitenketten aufgepfropft wurden und z.B. in der deutschen Offenlegungsschrift 1 802 435 beschrieben sind.

B) Sekundäre und tertiäre Aminogruppen aufweisende Polyurethane sowie deren Quaternierungsprodukte sind beispielsweise bekannt aus den deutschen Patentschriften 851 550 und 1 301 118.

Besonders hervorzuheben sind Reaktionsprodukte aus bis- oder höherfunktionellen Chlorameisensäureestern und aliphatischen diprimären Aminen und mindestens einer weiteren sekundären oder vorzugsweise tertiären Aminogruppe sowie deren Quaternierungsprodukte.

C) Sekundäre und/oder tertiäre Aminogruppen sowie deren Quaternierungsprodukte enthaltende Polyharnstoffe sind beispielsweise bekannt aus der deutschen Patentschrift 851 550 und der US-Patentschrift 3 311 594.

Besonders hervorzuheben sind die Reaktionsprodukte aus Diisocyanaten und aliphatischen diprimären Aminen mit einem oder mehreren sekundären und/oder tertiären Stickstoffatomen in der Kette sowie die Umsetzungsprodukte aus Harnstoff und mehrwertigen Aminen, die mindestens zwei zur Harnstoffbildung befähigte Aminogruppen und mindestens eine sekundäre oder vorzugsweise tertiäre Aminogruppe enthalten.

Diese Amidgruppen-, Urethangruppen- bzw. Harnstoffgruppen-haltigen Polyamide können auch mit gegenüber Aminogruppen polyfunktionellen Verbindungen molgewichtsvergrößert werden.

Als gegenüber Aminogruppen polyfunktionellen Verbindungen seien beispielsweise genannt:

bifunktionelle Verbindungen, wie $\alpha,\omega$-Alkyldihalogenide, z.B. 1,2-Dichloräthan, 1,2-Dibromäthan, 1,2-Dichlorpropan, 1,3-Dichlorpropan, 1,6-Dichlorhexan;
$\omega,\omega'$-Dihalogenäther, z.B. 2,2'-Dichlor-diäthyläther, Bis-(ß-chlor-isopropyl)-äther, Bis-(4-chlor-butyläther);
Halogenhydrine bzw. Epihalogenhydrine, z.B. Epichlorhydrin, 1,3-Dichlorpropanol-(2), Bis-(3-chlor-2-hydroxypropyl)-äther, 1,4-Dichlor-2,3-epoxy-butan;
Bis-epoxy-Verbindungen, z.B. 1,2,3,4-Diepoxybutan, Diglycidyläther, Äthan-1,2-bis-glycidyläther, Butan-1,4-bis-glycidyläther;
$\omega$-Halogencarbonsäurehalogenide, z.B. Chloracetylchlorid, 2-Chlorpropionylchlorid, 3-Chlorpropionylchlorid, 3-Brompropionylbromid;
Vinylverbindungen, z.B. Divinyläther, Divinylsulfon, Methylenbisacrylamid;
weiterhin 4-Chlormethyl-1,3-dioxolanon-(2) und 2-Chloräthyl-chlorameisensäureester, ferner Chlorameisensäureester, 3-Chlor-2-hydroxypropyläther und Glycidyläther von Polyalkylenoxiden, z.B. Polyäthylenoxiden, sowie von Umsetzungsprodukten von 1 bis 50 Mol Alkylenoxiden, wie Äthylenoxid und/oder Propylenoxid, mit 1 Mol zwei- oder mehrwertiger Polyole oder anderer mindestens zwei aktive Wasserstoffatome enthaltender Verbindungen;

trifunktionelle Verbindungen, wie N,N'-Triacryloylhexahydro-s-triazin.

Besonders gut für dieses Verfahren sind die Polyamine geeignet, deren Aminogruppen zu einem Teil oder vorteilhafter Weise zum größten Teil aus tertiären Aminogruppen bestehen. Solche Amine lassen sich aus den o.g. Polyaminen, die nur oder größten Teils sekundäre Aminogruppen enthalten, leicht mit den üblichen Alkylierungsmitteln herstellen.

D) Geeignete Polyguanidine sind beispielsweise bekannt aus der deutschen Patentschrift 833 708. Besonders zu nennen ist das Kondensationsprodukt aus etwa gleichen Teilen Dicyandiamid und Formaldehyd.

Die Anwendungsmengen der verfahrensgemäßen Substanzen hängen von der eingesetzten Farbstoffmenge, der Flottenaufnahme des Textilmaterials und der Farbtiefe ab und sind durch Vorversuche festzulegen. Im allgemeinen haben sich Anwendungsmengen zwischen 0,003 und 0,3 % bezogen auf das Trockengewicht des Textilgutes als vorteilhaft erwiesen.

Zur Durchführung des Verfahrens werden die erfindungsgemäßen Mittel vor der Trocknung und Fixierung des Farbstoffs auf das Textilmaterial aufgebracht.

Das Aufbringen kann nach verschiedenen üblichen Methoden erfolgen.

Dabei können beispielsweise Klotzflotte und Kondensat

gleichzeitig oder nacheinander auf das Färbegut aufgebracht werden.

Bei einer bevorzugten Ausführungsform wird das Textilmaterial zunächst mit der wäßrigen Dispersion des Farbstoffs imprägniert und daraufhin beidseitig mit einer Lösung des Kondensates besprüht, getrocknet und thermosoliert.

Das erfindungsgemäß zu verwendende Mittel wird insbesondere in Form einer wäßrigen Lösung aufgebracht. Die Lösung kann aber auch andere mit Wasser mischbare Lösungsmittel z.B. Alkohole wie Äthanol, n- oder iso-Propanol oder Eisessig enthalten.

Der pH-Wert der anwendungsfertigen wäßrigen Lösung soll vorzugsweise zwischen pH 3,5 und 6 liegen.

Als Versprühungseinrichtungen kommen bekannte Besprüh- und Vernebelungseinrichtungen in Betracht.

Die Besprühung erfolgt von beiden Seiten der Warenbahn mit einer Feuchteaufnahme von nicht mehr als 20 %, vorzugsweise mit 5 - 10 % vom Warengewicht.

Die erforderlichen Vernebelungsgeräte sind bekannt. Sie können leicht in vorhandene Kontinueanlagen eingebaut werden.

Die bei dem erfindungsgemäßen Färbeverfahren zur Anwendung gelangenden Dispersionsfarbstoffe sind die üblicherweise zum Färben von Polyestern und Celluloseestern verwendeten Dispersionsfarbstoffe, wie sie beispielsweise in Colour Index, Vol 2, S. 2479 - 2772, 3. Edition, (1971) beschrieben sind.

Mit Hilfe des erfindungsgemäßen Verfahrens gelingt es, Textilmaterialien, z.B. Gewebe und Gewirke aus Polyestern, wie Polyterephthalsäureglykolestern, oder Polyestern aus 1 4-Bis-(hydroxymethyl)-cyclohexan und Terephthalsäure, und Celluloseestern, z.B. Cellulosetriacetat, mit Dispersionsfarbstoffen hervorragend gleichmäßig zu färben.

Das Verfahren ist auch anwendbar zum Färben von Mischungen von Polyestern mit Wolle, Baumwolle oder Regeneratcellulose-Fasern.

Besonders vorteilhaft läßt sich das Verfahren anwenden beim Färben mit anionisch formierten Dispersionsfarbstoffen.

Als anionische Formierungsmittel kommen beispielsweise in Betracht:
Alkylsulfate, Alkylsulfonate, Aralkylsulfonate, Ligninsulfonate und Kondensationsprodukte des Formaldehyds mit aromatischen Sulfonsäuren.

Die Färbeflotte kann außer den anionisch formierten Dispersionsfarbstoffen nichtionogene und/oder anionische Netz-, Dispergier- und/oder Thermosolhilfsmittel enthalten sowie handelsübliche Klotzhilfsmittel und Verdickungsmittel wie sie zur Verhinderung des bekannten Grauschleiers bei Foulardfärbung verwendet werden.

Als nichtionogene Netz-, Dispergier- und/oder Klotzhilfsmittel seien beispielsweise genannt:

Additionsprodukte von 3 - 30 Mol Äthylenoxid an 1 Mol p-Nonylphenol
Additionsprodukte von 15-40 Mol Äthylenoxid an 1 Mol Oleylalkohol oder Cocosalkohol
Additionsprodukte von 10-30 Mol Äthylenoxid an 1 Mol Ölsäure, Ricinolsäure oder Cocosfettsäure
Additionsprodukte von 15-40 Mol Äthylenoxid an 1 Mol Rizinusöl
Additionsprodukte von 20-50 Mol Äthylenoxid an 1 Mol Abietinsäure
Additionsprodukte von 10-15 Mol Äthylenoxid an p-Oxydiphenyl oder dessen Alkyl- und/oder Aralkylderivate

Als anionische Netz-, Dispergier- und/oder Thermosolhilfsmittel seien beispielsweise genannt:
Sulfierungsprodukte der Additionsprodukte von 7 - 30 Mol Äthylenoxid an 1 Mol Nonylphenol, 1,3-Bis-(2-äthylhexyl)-glycerinäther-2-sulfat, Laurylsulfat, sulfatiertes Rizinusöl, Sulfobernsteinsäureester, Paraffinsulfonate, Dodecylbenzolsulfonate, Oleylsulfat, Fettsäureester des oxyäthansulfonsauren Natriums, Diäthylaminsalz der Ölsäure, Diisobutylnaphthalinsulfonate,Di-(2-äthylenhexyl)-phosphate.

Geeignete Verdickungsmittel natürlicher Provenienz sind:

Johannisbrotkernmehl, Kernmehläther, Stärkeäther, Galaktomannane, Methylcellulose, Carboxymethylcellulose, Hydroxyäthylcellulose, Hydroxypropylcellulose und Alginate sowie deren Mischungen.

Als geeignete Verdickungsmittel synthetischer Herkunft sind zu nennen:
Polyacrylsäure, Polyacrylsäuresalze, Polyacrylamide, Polyacrylsäureester sowie deren Mischungen und Mischpolymerisate.

Wegen der Farbstoffmigration beim Trocknen von foulardierten Dispersionsfärbungen blieb das kontinuierliche Färben bisher auf dichtgeschlagene Polyestergewebe und Mischgewebe beschränkt. Die Vorteile des Kontinuefärbens nach dem Termosolverfahren konnten daher für das Färben großporiger Webwaren mit lockeren Bindungen sowie den aus voluminösen Endlosgarnen hergestellten Wirkwaren nicht genutzt werden, da die hohe Flottenaufnahme beim Foulardieren und die leichte Migration der Farbstoffteilchen durch die großen Poren zu einer Farbstoffanreicherung an der beim Trocknen heißeren Oberfläche des Textilmaterials führte. Die auf diese Weise gefärbten Materialien zeigten daher sowohl eine starke Abhängigkeit der Egalität von der Gleichförmigkeit des Trokkenaggregates als auch eine ungenügende Durchfärbung der Kreuzungsstellen im Inneren des Textilmaterials. Die Migration bewirkt somit eine Anreicherung des Farbstoffs an der Gewebeoberfläche und eine Verarmung an Farbstoff im Gewebeinnern, so daß die Reproduzierbarkeit einer Thermosolfärbung stark von den Trockenbedingungen abhängt. Mit Hilfe des erfindungsgemäßen Verfahrens ist es möglich, unter Verwendung handelsüblicher stabiler Dispersionfarbstoff-Flotten auf Kontakthitze-, Heißluft- bzw. Hochtemperaturdampf-Thermosolanlagen brauchbare Färbungen auf voluminösen Web- und Wirkwaren aus Polyester und Polyester/Mischgarnen herzustellen, die bisher nur nach dem arbeitsintensiveren Ausziehverfahren erhalten oder durch Verwendung speziell für den Kontinueprozeß bereiteter Dispersionsfarbstoffzubereitungen erhalten werden konnten.

Es hat sich gezeigt, daß die bisher vorgeschlagenen migrationshemmenden Mittel nicht zu einer optimalen Wirkung führen. Dies äußert sich besonders deutlich bei der vergleichenden Prüfung mit dem AATCC-Test, der von J.N. Etters "Textile Chemist and Colorist", Vol. 4, No. 6, S. 160, und J.N. Etters und A. Urbanik "Textile Chemist and Colorist" Vol. 9, No. 5, S. 38, beschrieben wird.

Ein weiterer Vorteil der neuen Mittel besteht in ihrer guten Licht- und Hitzebeständigkeit.

Das vorstehend beschriebene Sprühverfahren wirkt sich besonders vorteilhaft aus, wenn eine ausflockende Wirkung des Migrationsinhibitors auf die Dispersionsfarbstoff-Flotte vermieden werden soll. Ausflockungen dieser Art bewirken ein unruhiges Warenbild und eine nicht ausreichende Migrationshemmung. Da sich die erfindungsgemäßen Migrationsin-

BAD ORIGINAL

hibitoren gut versprühen lassen, sind sie für das Sprühverfahren besonders geeignet.

Beispiel 1

Eine Maschenware aus 100 % texturiertem Polyesterendlosmaterial wird mit einer Flotte bestehend aus:

40 Teilen einer Farbstoffdispersion, die durch Vermahlen von 12 Teilen des Farbstoffs der Formel:

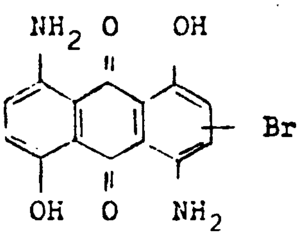

mit 28 Teilen dinaphthylmethansulfonsaurem Natrium erhalten wurde,

1 Teil 1,3-Bis-(äthyl-hexyl)-glycerinäther-2-sulfat und

959 Teilen Wasser mit einer Flottenaufnahme von 130 % foulardiert und anschließend beidseitig mit einer Lösung von 10 Teilen eines durch Kondensation von Harnstoff und Methyl-bis-(3-aminopropyl)-amin im Molverhältnis 1:1 gemäß US-PS 3 311 594 Beisp.6 hergestellten kationischen Polyharnstoffs in

990 Teilen Wasser mit einer Feuchteaufnahme von 10 % besprüht, 1 Sekunde in einem Infrarotschacht angetrocknet und 12 Minuten bei 175°C in einem Hochtemperaturdämpfer mit überhitztem Wasserdampf thermosoliert. Anschließend wird auf einer Strangwaschmaschine unter Zusatz von 2 Teilen eines Waschmittels bestehend aus:

30 Teilen Paraffinsulfonat und
15 Teilen Isononylphenolheptaglykoläther in
998 Teilen Wasser

geseift.

Man erhält eine gleichmäßige, gut durchgefärbte, migrationsfreie Färbung. Ohne Aufsprühung des erfindungsgemäßen kationischen Polyharnstoffs erhält man eine Färbung mit deutlicher Migration. Verwendet man anstelle des genannten kationischen Kondensationsproduktes aus Harnstoff und Methyl-bis-(3-aminopropyl)-amin 1:1 gleiche Teile eines analog im Molverhältnis 0,9:1 hergestellten Polyharnstoffamins oder gleiche Teile des kationischen Polyharnstoffs, der durch Polykondensation von Harnstoff und N-2-Aminoäthylpiperazin im Verhältnis 0,95:1 erhalten wurde, so resultiert eine gleichwertige migrationsfreie Färbung.

<u>Beispiel 2</u>

Eine Webware bestehend aus 65 Teilen Polyesterfasern und 35 Teilen Zellwolle wird mit einer Flotte bestehend aus:

30 Teilen einer Farbstoffdispersion, die durch Vermahlen von 12 Teilen des Farbstoffs der Formel:

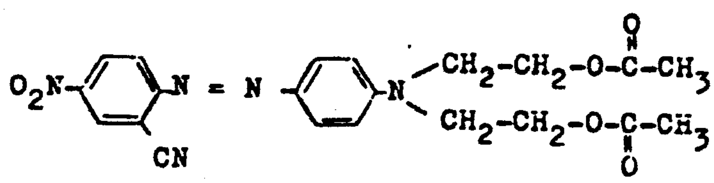

mit 28 Teilen dinaphthylmethansulfonsaurem Natrium erhalten wurde,

2 Teilen 1,3-Bis-(äthylhexyl)-glycerinäther-2-sulfat und

968 Teilen Wasser mit einer Flottenaufnahme von 110 % foulardiert.

Anschließend wird mit einer Lösung bestehend aus:

10 Teilen des kationischen Polykondensationsproduktes aus 1 Mol Methyl-bis-(3-aminopropyl)-amin und 1 Mol Adipinsäure in

990 Teilen Wasser mit einer Flottenaufnahme von 10 % besprüht und 1 Minute bei 100°C getrocknet.

Die getrocknete Ware wird daraufhin auf einer Thermosolanlage 45 Sekunden bei 200°C thermosoliert.

Nach der üblichen Nachwäsche (vgl. Beispiel 1) erhält man eine migrationsfreie Rotfärbung. Verwendet man anstelle des Polykondensationsproduktes von 1 Mol Methyl-bis-(3-aminopropyl)-amin und 1 Mol Adipinsäure gleiche Gewichtsmengen des Polyadditionsproduktes aus 1 Mol Methyl-bis-(3-aminopropyl)-amin und 1 Mol Hexamethylendiisocyanat, so erhält man eine gleichwertige Färbung.

Verfährt man in gleicher Weise, jedoch ohne Nachbehandlung des Gewirkes mit dem genannten kationischen Polymeren, erhält man eine Färbung mit deutlicher Migration.

Beispiel 3

Eine Webware aus 100 % Polyesterfasern wird mit einer Flotte bestehend aus:

50 Teilen einer Farbstoffdispersion, die durch Vermahlen von 15 Teilen des Farbstoffs der Formel:

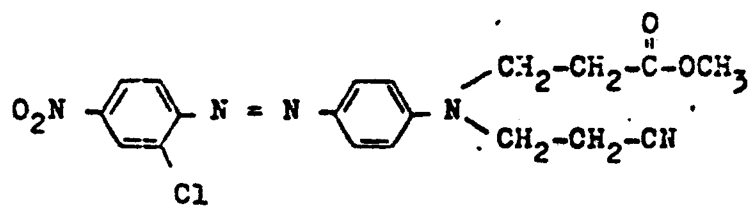

mit 30 Teilen dinaphthylmethansulfonsaurem Natrium erhalten wurde und

950 Teilen Wasser mit einer Flottenaufnahme von 80 % floulardiert,

daraufhin mit einer Lösung bestehend aus

997 Teilen Wasser und

3 Teilen einer 25 prozentigen wäßrigen Lösung des polyquaternären Polyharnstoffs, der hergestellt ist aus:

50,3 Teilen eines aus 4,4'-Dioxy-diphenyl-2,2'-propan und Epichlorhydrin gebildeten Epoxidharzes mit dem Epoxidäquivalent von 193

30,0 Teilen N,N'-Bis-(3-dimethylaminopropyl)-harnstoff

25,7 Teilen konzentrierter Salzsäure 37 prozentig und

215,2 Teilen Wasser bei 70 - 80°C,

mit einer Flottenaufnahme von 8 % besprüht, im Infrarottrockner vorgetrocknet und 1 Minute bei 140°C mittels Heißluft zu Ende getrocknet.

Die getrocknete Ware wird daraufhin auf einer Thermosolanlage 45 Sekunden bei 220°C thermosoliert. Nach der Nachbehandlung mit einer Lösung bestehend aus:

8 Teilen Natriumhydroxid und
8 Teilen Natriumhydrosulfit in
984 Teilen Wasser

während 2 Minuten bei 80°C, anschließendem Spülen in kaltem Wasser und Neutralisation mit einer Lösung bestehend aus:

2 Teilen Eisessig in
998 Teilen Wasser und Trocknen auf einem Zylindertrockner,

erhält man eine egale migrationsfreie Scharlachfärbung mit gut durchgefärbten Kreuzungsstellen.

Verwendet man anstelle des polyquaternären Polyharnstoffs ein aus o.g. Epoxidharz und N,N'-Bis-(3-dimethylaminopropyl)-oxamid analog hergestelltes polyquaternäres Polyoxamid, so erhält man eine gleichwertige migrationsfreie Färbung.

Erfolgt die Färbung und Nachbehandlung in gleicher Weise, jedoch ohne die Nachbehandlung mit den polyquaternären Polyharnstoffen, so erhält man eine Scharlachfärbung, wobei die Kreuzungsstellen des Gewebes nicht durchgefärbt sind, was sich besonders durch Herausziehen der Kettfäden an der Gewebekante veranschaulichen läßt.

Patentansprüche

1. Mittel zur Verhinderung der Migration von Dispersionsfarbstoffen, dadurch gekennzeichnet, daß sie aus Kondensaten mit einem Molgewicht von mindestens 200, die sich wiederholenden Gruppierungen der Formel

$$-\overset{X}{\overset{\|}{C}}-NH-$$

worin X für O oder NH steht,
aufweisen, bestehen oder diese enthalten.

2. Mittel gemäß Anspruch 1, dadurch gekennzeichnet, daß die Kondensate wasserlöslich sind und sich ableiten von sekundäre und/oder tertiäre und/oder quaternäre Aminogruppen enthaltenden Polyamiden, Polyurethanen oder Polyharnstoffen mit einem Molgewicht von über 1000 oder von Polyguanidinen mit einem Molgewicht von über 200.

3. Mittel gemäß Anspruch 2, dadurch gekennzeichnet, daß die Polyamide, Polyurethane und Polyharnstoffe ein Molgewicht von über 2500 und die Polyguanidine ein Molgewicht von über 1000 haben.

4. Verfahren zum kontinuierlichen Färben von Textilmaterialien, die ganz oder teilweise aus Polyestern bestehen mit Dispersionsfarbstoffen, dadurch gekennzeichnet, daß vor der Trocknung und Fixierung des Farbstoffs migrationshemmende Mittel gemäß Anspruch 1 auf die Textilmaterialien aufgebracht werden.

5. Verfahren gemäß Asnpruch 4, dadurch gekennzeichnet, daß die migrationshemmenden Mittel gemäß Anspruch 1 nach dem Imprägnieren mit der wäßrigen Farbstoffdispersion auf das Textilmaterial aufgebracht werden.

6. Verfahren gemäß Anspruch 4, dadurch gekennzeichnet, daß die migrationshemmenden Mittel gemäß Anspruch 1 in Form ihrer wäßrigen Lösung aufgebracht werden.

7. Verfahren gemäß Anspruch 4, dadurch gekennzeichnet, daß das Färben mit anionisch formierten Dispersionsfarbstoffen erfolgt.

8. Verfahren gemäß Anspruch 6, dadurch gekennzeichnet, daß die wäßrige Lösung mit Wasser mischbare organische Lösungsmittel enthält.

9. Verfahren gemäß Anspruch 4, dadurch gekennzeichnet, daß die migrationshemmenden Mittel gemäß Anspruch 1 in einer Gewichtsmenge von 0,003 % bis 0,3 % bezogen auf das Trockengewicht des Textilmaterials eingesetzt werden.

Europäisches Patentamt

# EUROPÄISCHER RECHERCHENBERICHT

Nummer der Anmeldung

0001086
EP 78 10 0775

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHEMICAL ABSTRACTS, Vol. 84, 152105k, Nr. 22, Mai 31. 1976, Ito, Toshio, Sahara, Hajime, Matsuda, Kenji, Mitsubishi Rayon Co. Ltd, "Thermosol dyeing of polyester fibers"<br>& Japan. Kokai 75 154 584 (Cl.D06P)<br>-- | 1,2,4, 6 |
| X | CHEMICAL ABSTRACTS, Vol. 84, Nr. 22, Mai 31., 1976, 152128v Ito, Toshio, Sahara, Hajime, Matsuda, Kenji, Mitsubishi Rayon Co.Ltd. "Dyeing of fiber products"<br>& Japan. Kokai 76 01 774 (Cl.D06P)<br>-- | 1,2,4, 6 |
| X | FR - A - 1 385 244 (BAYER)<br>* Seite 3; Zusammenfassung; Seite 1, ganz; Seite 2, linke Spalte, Absätze 3 und 4 *<br>-- | 1,2,4, 6,7 |
| A | US - A - 3 957 427 (CHAMBERS)<br>* Ansprüche 1,5,9; Spalte 3, Zeilen 1-5 *<br>-- | 1,4 |
| A | FR - A - 1 498 727 (BASF)<br>* Zusammenfassungen I,1-3,II,III; Beispiele 5,8,9 *<br>-- | 1,4,5 |
| A | CH - A - 333 184 (J. WOLF)<br>*Patentansprüche I und II; Seite 2, Zeilen 22 und 23 *<br>./. | 1 |

KLASSIFIKATION DER ANMELDUNG (Int.Cl.²)

D 06 P 1/52
3/54
1/16
C 08 G 68/08
71/02
69/48
69/02
12/16
12/14

RECHERCHIERTE SACHGEBIETE (Int.Cl.²)

D 06 P 1/52
3/54
1/16
C 08 G 68/08
71/02
69/48
69/02
12/16
12/14

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

✓ Der vorliegende Recherchenbericht wurde für alle Patentansprüche erstellt.

| Recherchenort | Abschlußdatum der Recherche | Prüfer |
|---|---|---|
| Den Haag | 01-12-1978 | DEKEIREL |

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| DA | DE - B - 1 006 155 (BAYER)<br>* Patentansprüche 1,2; Spalte 3, Zeilen 35-38 *<br>-- | 1 | |
| DA | DE - C - 851 550 (BAYER)<br>* Patentansprüche; Seite 2, Zeile 62 *<br>-- | 1 | |
| P | FR - A - 2 368 573 (PROTEX)<br>* Patentansprüche 1,2,5; Beispiele 1-3,5-7 *<br>---- | 1,4,6,9 | RECHERCHIERTE SACHGEBIETE (Int. Cl.²) |